# EUROPÄISCHE PATENTANMELDUNG

(11) **EP 3 276 998 A1**
(43) Veröffentlichungstag der Anmeldung: **31.01.2018**
(21) Anmeldenummer: 16182103.8
(22) Anmeldetag: 29.07.2016
(51) Int. Cl.: H04W 8/20, H04W 12/06, H04L 29/06

(54) **PROFILAUTORISIERUNGSSERVER FÜR DAS HERUNTERLADEN VON SIM PROFILEN**

(71) Anmelder: Deutsche Telekom AG, 53113 Bonn (DE)
(72) Erfinder: Seifert, Olaf, 27308 Kirchlinteln (DE)
(74) Vertreter: Patentship Patentanwaltsgesellschaft mbH

(57) **Zusammenfassung**

Die vorliegende Erfindung betrifft ein einen Profilautorisierungsserver (100) zur Beschaffung eines Kommunikationsprofils für ein elektronisches Teilnehmeridentifikationsmodul (eSIM) eines mobilen Kommunikationsgerätes eines Benutzers, mit: einer Kommunikationsschnittstelle (107) zum Empfangen einer Profilanfrage nach dem Kommunikationsprofil, wobei die Profilanfrage eine elektronische Identifikation des elektronischen Identifikationsmoduls (103) aufweist, wobei die Kommunikationsschnittstelle (107) ferner ausgebildet ist, ein biometrisches Merkmal des Benutzers zu empfangen; einem Prozessor (109), welcher ausgebildet ist, die empfangene Profilanfrage auf der Basis des empfangenen biometrischen Merkmals zu autorisieren, um eine autorisierte Profilanfrage zu erhalten; wobei die Kommunikationsschnittstelle (107) ausgebildet ist, die autorisierte Profilanfrage nach dem Kommunikationsprofil an einen Profilserver (111) über ein Kommunikationsnetzwerk auszusenden.

## Beschreibung

Die vorliegende Erfindung betrifft das Gebiet der elektronischen Teilnehmeridentifikationsmodule (eSIM: electronic Subscriber Identification Module).

Elektronische Teilnehmeridentifikationsmodule (eSIMs) sind in mobilen Kommunikationsgeräten als festverdatete Hardwareschaltungen implementiert. Für eine Kommunikation über ein Kommunikationsnetzwerk benötigt jedes eSIM ein Kommunikationsprofil (eSIM-Profil), das einem Betreiber des Kommunikationsnetzwerks zugeordnet ist. Das Kommunikationsprofil bestimmt die Kommunikationsfähigkeit, wie beispielsweise ein Datenvolumen für das mit einem eSIM ausgestattete mobile Kommunikationsgerät in einem Kommunikationsnetzwerk eines Mobilfunknetzwerkbetreibers.

Üblicherweise wird das elektronische Kommunikationsprofil durch ein mobiles Kommunikationsgerät von einem Profilserver, beispielsweise von einem SMDP+- Profilserver abgerufen und für das elektronische Teilnehmeridentifikationsmodul aktiviert.

Es ist die Aufgabe der Erfindung, die Sicherheit des Abrufs eines elektronischen Kommunikationsprofils von einem Profilserver, insbesondere für eSIM-Anwendungen, zu erhöhen.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die vorliegende Erfindung basiert auf der Erkenntnis, dass die obige Aufgabe durch eine Zwischeninstanz gelöst werden kann, welche dem Profilserver vorgeschaltet ist und welche die Profilanfrage eines Benutzers mittels eines biometrischen Merkmals des Benutzers autorisiert. Die autorisierte Profilanfrage wird an den Profilserver, zusammen mit der elektronischen Identifikation des Teilnehmeridentifikationsmoduls und ggf. einer digitalen Signatur der Zwischeninstanz, übermittelt. Auf diese Weise kann der Profilserver die Autorisierung der Profilanfrage verifizieren. Die Zwischeninstanz kann als ein Profilautorisierungsserver kommunikationstechnisch zwischen dem mobilen Kommunikationsgerät und dem Profilserver geschaltet sein.

Gemäß einem ersten Aspekt betrifft die Erfindung einen Profilautorisierungsserver zur Beschaffung eines Kommunikationsprofils für ein elektronisches Teilnehmeridentifikationsmodul (eSIM) eines mobilen Kommunikationsgerätes eines Benutzers, mit: einer Kommunikationsschnittstelle zum Empfangen einer Profilanfrage nach dem Kommunikationsprofil, beispielswiese ein eSIM-Profil, wobei die Profilanfrage eine elektronische Identifikation des elektronischen Identifikationsmoduls aufweist, wobei die Kommunikationsschnittstelle ferner ausgebildet ist, ein biometrisches Merkmal des Benutzers zu empfangen; einem Prozessor, welcher ausgebildet ist, die empfangene Profilanfrage auf der Basis des empfangenen biometrischen Merkmals zu autorisieren, um eine autorisierte Profilanfrage zu erhalten; wobei die Kommunikationsschnittstelle ausgebildet ist, die autorisierte Profilanfrage nach dem Kommunikationsprofil an einen Profilserver über ein Kommunikationsnetzwerk auszusenden.

Der Profilautorisierungsserver ist kommunikationstechnisch zwischen dem mobilen Kommunikationsgerät und dem Profilserver angeordnet und stellt sicher, dass nur authentifizierte bzw. autorisierte Profilanfragen an den Profilserver übermittelt werden.

In einer Ausführungsform ist die Kommunikationsschnittstelle ausgebildet ist, ansprechend auf das Aussenden der autorisierten Profilanfrage das Kommunikationsprofil von dem Profilserver zu empfangen und das empfangene Kommunikationsprofil an das mobile Endgerät weiterzuleiten.

Die Kommunikationsschnittstelle ist beispielsweise eine WiFi, LTE- oder UMTS-Kommunikationsschnittstelle.

In einer Ausführungsform ist die Kommunikationsschnittstelle ausgebildet, zusammen mit der autorisierten Profilanfrage eine Netzwerkadresse des mobilen Kommunikationsgerätes an den Profilserver zu übermitteln.

In einer Ausführungsform ist die Kommunikationsschnittstelle ausgebildet, die Profilanfrage mit einer digitalen Signatur des Profilautorisierungsservers zu signieren, um die autorisierte Profilanfrage zu erhalten.

In einer Ausführungsform ist der Prozessor ausgebildet, ansprechend auf den Empfang der Profilanfrage das biometrische Merkmal von dem mobilen Kommunikationsgerät abzurufen und wobei die Kommunikationsschnittelle ausgebildet ist, das abgerufene biometrische Merkmal zu empfangen, oder wobei die Profilanfrage das biometrische Merkmal enthält und der Prozessor ausgebildet ist, das biometrische Merkmal aus der Profilabfrage zu extrahieren.

In einer Ausführungsform ist der Prozessor ausgebildet, das biometrische Merkmal mit einem vorgespeicherten Referenzmerkmal des Benutzers zu vergleichen und bei einer Übereinstimmung des biometrischen Merkmals mit dem Referenzmerkmal die Profilanfrage zu autorisieren.

In einer Ausführungsform ist die Kommunikationsschnittstelle ausgebildet, das biometrische Merkmal an einen Authentifizierungsserver zu übermitteln, um das biometrische Merkmal zu authentifizieren, wobei die Kommunikationsschnittstelle ausgebildet ist, eine Authentifikationsnachricht, welche die erfolgreiche Authentifizierung des biometrischen Merkmals anzeigt, von dem Authentifizierungsserver zu empfangen, und wobei der Prozessor ausgebildet ist, die Profilanfrage ansprechend auf den Empfang der Authentifikationsnachricht zu autorisieren.

In einer Ausführungsform ist das biometrische Merkmal ein Fingerabdruck oder ein Venenverlauf oder eine Bildaufnahme des Benutzers oder eine Iris-Aufnahme des Benutzers.

Gemäß einem zweiten Aspekt betrifft die Erfindung einen Profilserver zur Bereitstellung eines Kommunikationsprofils eines Kommunikationsprofils für ein elektronisches Teilnehmeridentifikationsmodul (eSIM) eines mobilen Kommunikationsgerätes eines Benutzers, mit: einem Speicher, in welchem einer Mehrzahl von Kommunikationsprofilen gespeichert ist; einer Kommunikationsschnittstelle, beispielsweise einer Mobilfunkschnittstelle, zum Empfangen einer Profilanfrage nach einem

Kommunikationsprofil für das elektronische Teilnehmeridentifikationsmodul, wobei die Profilanfrage eine elektronische Identifikation des elektronischen Teilnehmeridentifikationsmoduls umfasst; und einem Prozessor, welche ausgebildet ist, die Autorisierung der Profilanfrage zu verifizieren, wobei der Prozessor ausgebildet ist, bei erfolgreicher Überprüfung der Autorisierung der Profilanfrage das elektronische Kommunikationsprofil aus dem Speicher auf der Basis der elektronischen Identifikation des elektronischen Teilnehmeridentifikationsmoduls aus dem Speicher auszulesen; und wobei die Kommunikationsschnittstelle ausgebildet ist, das ausgelesene elektronische Kommunikationsprofil über ein Kommunikationsnetzwerk auszusenden.

In einer Ausführungsform ist der Prozessor ausgebildet, die Autorisierung der empfangenen Profilanfrage durch Überprüfung einer digitalen Signatur der Profilanfrage zu verifizieren.

Gemäß einem dritten Aspekt betrifft die Erfindung ein mobiles Kommunikationsgerät mit einem elektronischen Teilnehmeridentifikationsmodul, welchem eine elektronische Identifikation zugeordnet ist, wobei das mobile Kommunikationsgerät einem Benutzer zugeordnet ist, mit: einer Aufnahmevorrichtung zur Aufnahme eines biometrischen Merkmals des Benutzers; und einer Kommunikationsschnittstelle, welche ausgebildet ist, eine Profilanfrage nach einem elektronischen Kommunikationsprofil an einen Profilserver auszusenden, wobei die Anfrage die elektronische Identifikation und das aufgenommene biometrische Merkmal aufweist, wobei die Kommunikationsschnittstelle ferner ausgebildet ist, das angeforderte elektronische Kommunikationsprofil zu empfangen.

In einer Ausführungsform umfasst die Aufnahmevorrichtung ein Fingerabdruckscanner oder eine Kamera zur Aufnahme des biometrischen Merkmals, insbesondere eines Bildes der Person oder eines Iris-Bildes des Benutzers.

Gemäß einem vierten Aspekt betrifft die Erfindung ein Subnetzwerk eines Kommunikationsnetzwerks mit einer Mehrzahl von Punkt-Zu-Punkt-Netzwerken, insbesondere ein Slice eines 5G-Kommunukationsnetzwerks, mit: dem Profilautorisierungsserver nach dem ersten Aspekt, wobei der Profilautorisierungsserver ausschließlich über das Subnetzwerk adressierbar ist.

In einer Ausführungsform umfasst das Subnetzwerk den Profilserver nach dem zweiten Aspekt, wobei der Profilserver über den Profilautorisierungsserver erreichbar, insbesondere ausschließlich über den Profilautorisierungsserver erreichbar ist.

Gemäß einem fünften Aspekt betrifft die Erfindung ein Verfahren zum Beschaffen eines Kommunikationsprofils für ein elektronisches Teilnehmeridentifikationsmodul (eSIM) eines mobilen Kommunikationsgerätes eines Benutzers, mit: Empfangen einer Profilanfrage nach dem Kommunikationsprofil von dem mobilen Kommunikationsgerät, wobei die Profilanfrage eine elektronische Identifikation des elektronischen Identifikationsmoduls aufweist; Empfangen eines biometrischen Merkmals der Person, insbesondere von dem mobilem Kommunikationsgerät; Autorisieren der Profilanfrage auf der Basis des empfangenen biometrischen Merkmals, um eine autorisierte Profilanfrage zu erhalten; Aussenden der autorisierten Profilanfrage an einen Profilserver, welcher elektronische Kommunikationsprofile verwaltet; Empfangen des elektronischen Kommunikationsprofils von dem Profilserver ansprechend auf das Aussenden der autorisierten Profilanfrage; und Weiterleiten des empfangenen elektronischen Kommunikationsprofils an das mobile Kommunikationsgerät.

Das Verfahren kann durch das Subnetzwerk nach dem vierten Aspekt oder durch die Server nach dem ersten Aspekt und zweiten Aspekt ausgeführt werden.

Weitere Ausführungsbeispiele der Erfindung werden Bezug nehmend auf die beiliegenden Figuren erläutert. Es zeigen:
- Fig. 1: einen Profilautorisierungsserver;
- Fig. 2: einen Profilserver;
- Fig. 3: ein mobiles Kommunikationsgerät; und
- Fig. 4: ein Subnetzwerk.

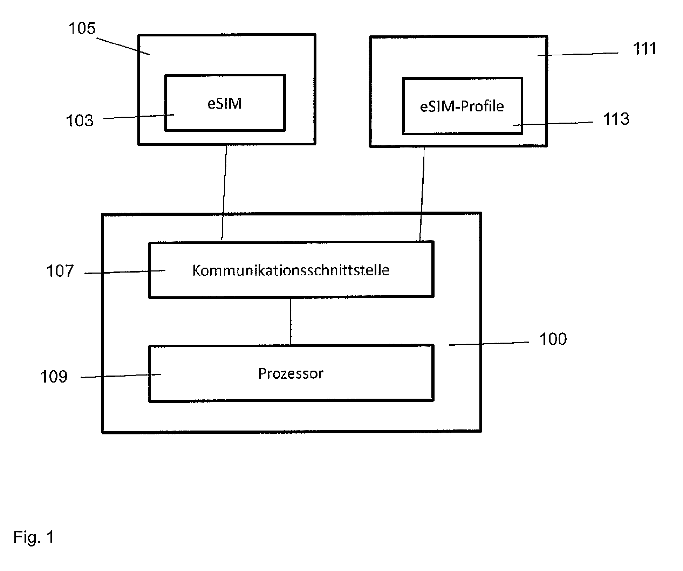

Fig. 1 zeigt einen Profilautorisierungsserver 100 zur Beschaffung bzw. zur Bereitstellung eines Kommunikationsprofils für ein elektronisches Teilnehmeridentifikationsmodul (eSIM) eines beispielhaft dargestellten mobilen Kommunikationsgerätes 105 eines Benutzers, mit einer Kommunikationsschnittstelle 107 zum Empfangen einer Profilanfrage nach dem Kommunikationsprofil, wobei die Profilanfrage eine elektronische Identifikation des elektronischen Identifikationsmoduls 103 aufweist, wobei die Kommunikationsschnittstelle 107 ferner ausgebildet ist, ein biometrisches Merkmal des Benutzers zu empfangen, einem Prozessor 109, welcher ausgebildet ist, die empfangene Profilanfrage auf der Basis des empfangenen biometrischen Merkmals zu autorisieren, um eine autorisierte Profilanfrage zu erhalten, wobei die Kommunikationsschnittstelle 107 ausgebildet ist, die autorisierte Profilanfrage nach dem Kommunikationsprofil an einen beispielhaft dargestellten Profilserver 111 über ein Kommunikationsnetzwerk auszusenden.

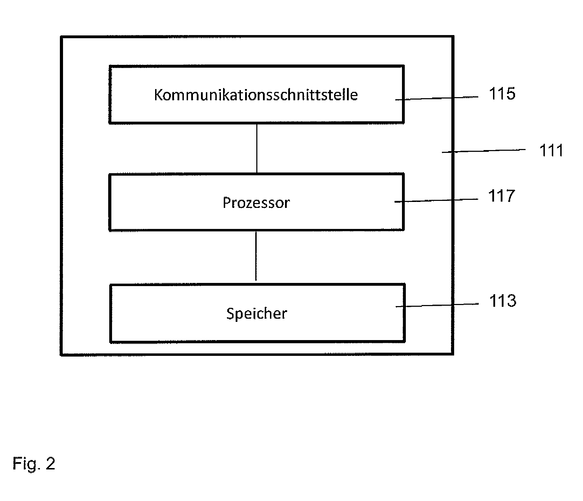

Fig. 2 zeigt den Profilserver 111 zur Bereitstellung eines Kommunikationsprofils eines Kommunikationsprofils für ein elektronisches Teilnehmeridentifikationsmodul (eSIM) des beispielhaft dargestellten mobilen Kommunikationsgerätes 105 eines Benutzers, mit einem Speicher 113, in welchem einer Mehrzahl von Kommunikationsprofilen gespeichert ist, einer Kommunikationsschnittstelle 115 zum Empfangen einer Profilanfrage nach einem Kommunikationsprofil für das elektronische Teilnehmeridentifikationsmodul 103, wobei die Profilanfrage eine elektronische Identifikation des elektronischen Teilnehmeridentifikationsmoduls 103 umfasst, und einem Prozessor 117, welcher ausgebildet ist, die Autorisierung der Profilanfrage zu verifizieren, wobei der Prozessor 117 ferner ausgebildet ist, bei erfolgreicher Überprüfung der Autorisierung der Profilanfrage das elektronische Kommunikationsprofil aus dem Speicher 113 auf der Basis der elektronischen Identifikation des elektronischen Teilnehmeridentifikationsmoduls 103 auszulesen, und wobei die Kommunikationsschnittstelle 115 ausgebildet ist, das ausgelesene elektronische Kommunikationsprofil über ein Kommunikationsnetzwerk auszusenden.

Der Profilserver kann ein eSIM-Profilserver sein und kann in einem Kommunikationsnetzwerk angeordnet sein.

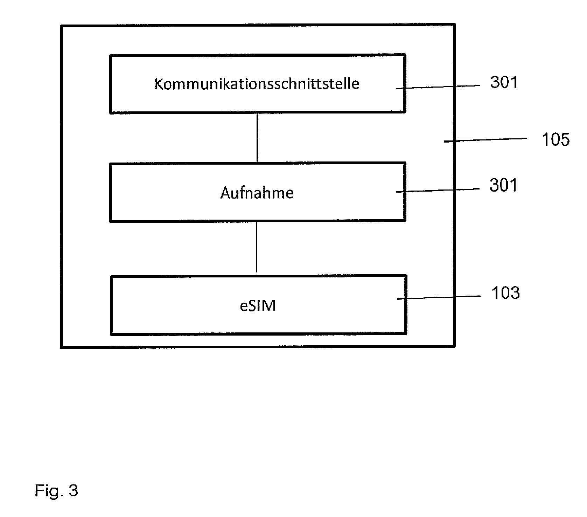

Fig. 3 zeigt das mobile Kommunikationsgerät 105 mit einem elektronischen Teilnehmeridentifikationsmodul 103, welchem eine elektronische Identifikation zugeordnet ist, wobei das mobile Kommunikationsgerät 105 einem Benutzer zugeordnet ist, mit einer Aufnahmevorrichtung 301 zur Aufnahme eines biometrischen Merkmals des Benutzers, und einer Kommunikationsschnittstelle 301, welche ausgebildet ist, eine Profilanfrage nach einem elektronischen Kommunikationsprofil an einen Profilserver 111 auszusenden, wobei die Anfrage die elektronische Identifikation und das aufgenommene biometrische Merkmal aufweist, wobei die Kommunikationsschnittstelle 301 ferner ausgebildet ist, das angeforderte elektronische Kommunikationsprofil zu empfangen.

In einer Ausführungsform bilden der Profilautorisierungsserver 100 und der Profilserver 111 ein Kommunikationssystem zur Bereitstellung von elektronischen Kommunikationsprofilen in einem Kommunikationsnetzwerk, wie beispielsweise in einem LTE- oder UMTS-Kommunikationsnetzwerk.

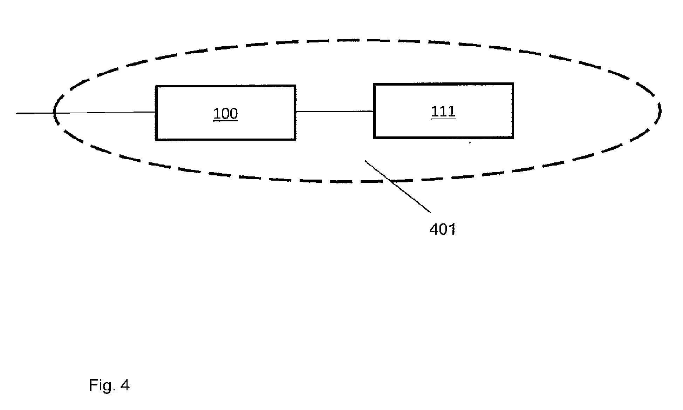

In einer Ausführungsform kann die Autorisierung der Profilanfrage durch einen elektronischen Dienst erfolgen, welcher durch das in Fig. 4 dargestellte Subnetzwerk 400 mit dem Profilautorisierungsserver 100 und, optional, mit dem Profilserver 111, welcher dem Profilautorisierungsserver 100 nachgeschaltet ist, bereitgestellt ist.

Das Subnetzwerk 400 ist beispielsweise ein Punkt-zu-Punkt-Subnetzwerk zwischen dem mobilen Kommunikationsgerät 105 und dem Profilautorisierungsserver 100. Das Subnetzwerk kann weitere Netzwerkentitäten wie beispielsweise einen Router oder ein Gateway oder eine Basisstation aufweisen, welche in Fig. 4 nicht dargestellt sind.

Das Subnetzwerk 400 hat beispielsweise eine eigene Netzwerkadresse und/oder einen Netzwerk-Identifizierer für die Adressierung des Subnetzwerks 400 aufweisen.

Das Subnetzwerk kann ein Slice eines 5G-Kommunikationsnetzwerks sein,

## Patentansprüche

1. Profilautorisierungsserver (100) zur Beschaffung eines Kommunikationsprofils für ein elektronisches Teilnehmeridentifikationsmodul (eSIM) eines mobilen Kommunikationsgerätes eines Benutzers, mit:
einer Kommunikationsschnittstelle (107) zum Empfangen einer Profilanfrage nach dem Kommunikationsprofil, wobei die Profilanfrage eine elektronische Identifikation des elektronischen Identifikationsmoduls (103) aufweist, wobei die Kommunikationsschnittstelle (107) ferner ausgebildet ist, ein biometrisches Merkmal des Benutzers zu empfangen;
einem Prozessor (109), welcher ausgebildet ist, die empfangene Profilanfrage auf der Basis des empfangenen biometrischen Merkmals zu autorisieren, um eine autorisierte Profilanfrage zu erhalten; wobei
die Kommunikationsschnittstelle (107) ausgebildet ist, die autorisierte Profilanfrage nach dem Kommunikationsprofil an einen Profilserver (111) über ein Kommunikationsnetzwerk auszusenden.

2. Profilautorisierungsserver (100) nach Anspruch 1, wobei die Kommunikationsschnittstelle (107) ausgebildet ist, ansprechend auf das Aussenden der autorisierten Profilanfrage das Kommunikationsprofil von dem Profilserver (111) zu empfangen und das empfangene Kommunikationsprofil an das mobile Kommunikationsgerät (105) weiterzuleiten.

3. Profilautorisierungsserver (100) nach Anspruch 1 oder 2, wobei die Kommunikationsschnittstelle (107) ausgebildet ist, zusammen mit der autorisierten Profilanfrage eine Netzwerkadresse des mobilen Kommunikationsgerätes (105) an den Profilserver (111) zu übermitteln.

4. Profilautorisierungsserver (100) nach einem der vorstehenden Ansprüche, wobei die Kommunikationsschnittstelle (107) ausgebildet ist, die Profilanfrage mit einer digitalen Signatur des Profilautorisierungsservers (100) zu signieren, um die autorisierte Profilanfrage zu erhalten.

5. Profilautorisierungsserver (100) nach einem der vorstehenden Ansprüche, wobei der Prozessor (109) ausgebildet ist, ansprechend auf den Empfang der Profilanfrage das biometrische Merkmal von dem mobilen Kommunikationsgerät (105) abzurufen, wobei die Kommunikationsschnittelle (107) ausgebildet ist, das abgerufene biometrische Merkmal zu empfangen, oder wobei die Profilanfrage das biometrische Merkmal enthält und der Prozessor (109) ausgebildet ist, das biometrische Merkmal aus der Profilabfrage zu extrahieren.

6. Profilautorisierungsserver (100) nach einem der vorstehenden Ansprüche, wobei der Prozessor (109) ausgebildet ist, das biometrische Merkmal mit einem vorgespeicherten Referenzmerkmal des Benutzers zu vergleichen und bei einer Übereinstimmung des biometrischen Merkmals mit dem Referenzmerkmal die Profilanfrage zu autorisieren.

7. Profilautorisierungsserver (100) nach einem der vorstehenden Ansprüche, wobei die Kommunikationsschnittstelle (107) ausgebildet ist, das biometrische Merkmal an einen Authentifizierungsserver zu übermitteln, um das biometrische Merkmal zu authentifizieren, wobei die Kommunikationsschnittstelle (107) ferner ausgebildet ist, eine Authentifikationsnachricht, welche die erfolgreiche Authentifizierung des biometrischen Merkmals anzeigt, von dem Authentifizierungsserver zu empfangen, und wobei der Prozessor (109) ausgebildet ist, die Profilanfrage ansprechend auf den Empfang der Authentifikationsnachricht zu autorisieren.

8. Profilautorisierungsserver (100) nach einem der vorstehenden Ansprüche, wobei das biometrische Merkmal ein Fingerabdruck oder ein Venenverlauf oder eine Bildaufnahme des Benutzers oder eine Iris-Aufnahme des Benutzers ist.

9. Profilserver (111) zur Bereitstellung eines Kommunikationsprofils eines Kommunikationsprofils für ein elektronisches Teilnehmeridentifikationsmodul (eSIM) eines mobilen Kommunikationsgerätes (105) eines Benutzers, mit:
einem Speicher (113), in welchem einer Mehrzahl von Kommunikationsprofilen gespeichert ist;
einer Kommunikationsschnittstelle (115) zum Empfangen einer Profilanfrage nach einem Kommunikationsprofil für das elektronische Teilnehmeridentifikationsmodul (103), wobei die Profilanfrage eine elektronische Identifikation des elektronischen Teilnehmeridentifikationsmoduls (103) umfasst; und
einem Prozessor (117), welcher ausgebildet ist, die Autorisierung der Profilanfrage zu verifizieren, wobei der Prozessor (117) ferner ausgebildet ist, bei erfolgreicher Überprüfung der Autorisierung der Profilanfrage das elektronische Kommunikationsprofil aus dem Speicher (113) auf der Basis der elektronischen Identifikation des elektronischen Teilnehmeridentifikationsmoduls (103) auszulesen; und wobei
die Kommunikationsschnittstelle (115) ausgebildet ist, das ausgelesene elektronische Kommunikationsprofil über ein Kommunikationsnetzwerk auszusenden.

10. Profilserver (111) nach Anspruch 9, wobei der Prozessor (117) ausgebildet ist, die Autorisierung der empfangenen Profilanfrage durch Überprüfung einer digitalen Signatur der Profilanfrage zu verifizieren.

11. Mobiles Kommunikationsgerät (105) mit einem elektronischen Teilnehmeridentifikationsmodul (103), welchem eine elektronische Identifikation zugeordnet ist, wobei das mobile Kommunikationsgerät (105) einem Benutzer zugeordnet ist, mit:
einer Aufnahmevorrichtung (301) zur Aufnahme eines biometrischen Merkmals des Benutzers; und
einer Kommunikationsschnittstelle (301), welche ausgebildet ist, eine Profilanfrage nach einem elektronischen Kommunikationsprofil an einen Profilserver (111) auszusenden, wobei die Anfrage die elektronische Identifikation und das aufgenommene biometrische Merkmal aufweist, wobei die Kommunikationsschnittstelle (301) ferner ausgebildet ist, das angeforderte elektronische Kommunikationsprofil zu empfangen.

12. Mobiles Kommunikationsgerät (105) nach Anspruch 11, wobei die Aufnahmevorrichtung (301) ein Fingerabdruckscanner oder eine Kamera zur Aufnahme des biometrischen Merkmals, insbesondere eines Bildes der Person oder eines Iris-Bildes des Benutzers, aufweist.

13. Subnetzwerk (401) eines Kommunikationsnetzwerks mit einer Mehrzahl von Punkt-Zu-Punkt-Netzwerken, insbesondere ein Slice eines 5G-Kommunukationsnetzwerks, mit:
dem Profilautorisierungsserver (100) nach einem der Ansprüche 1 bis 8, wobei der Profilautorisierungsserver (100) ausschließlich über das Subnetzwerk (401) adressierbar ist.

14. Subnetzwerk (401) nach Anspruch 13, mit dem Profilserver (111) nach einem der Ansprüche 9 oder 10, wobei der Profilserver (111) über den Profilautorisierungsserver (100) erreichbar, insbesondere ausschließlich über den Profilautorisierungsserver erreichbar ist.

15. Verfahren zum Beschaffen eines Kommunikationsprofils für ein elektronisches Teilnehmeridentifikationsmodul (103) eines mobilen Kommunikationsgerätes (105) eines Benutzers, mit:
Empfangen einer Profilanfrage nach dem Kommunikationsprofil von dem mobilen Kommunikationsgerät (105), wobei die Profilanfrage eine elektronische Identifikation des elektronischen Identifikationsmoduls (103) aufweist;
Empfangen eines biometrischen Merkmals der Person, insbesondere von dem mobilem Kommunikationsgerät (105);
Autorisieren der Profilanfrage auf der Basis des empfangenen biometrischen Merkmals, um eine autorisierte Profilanfrage zu erhalten;
Aussenden der autorisierten Profilanfrage an einen Profilserver (111), welcher elektronische Kommunikationsprofile verwaltet;
Empfangen des elektronischen Kommunikationsprofils von dem Profilserver (111) ansprechend auf das Aussenden der autorisierten Profilanfrage; und
Weiterleiten des empfangenen elektronischen Kommunikationsprofils an das mobile Kommunikationsgerät (105).
